# EUROPEAN PATENT SPECIFICATION

(11) **EP 2 126 328 B1**
(45) Date of publication and mention of the grant of the patent: **01.08.2012**
(21) Application number: 07859121.1
(22) Date of filing: 17.12.2007
(51) Int. Cl.: F02M 37/00, F02M 31/16, F02N 19/04

(54) **FUEL HEATING SYSTEM**
BRENNSTOFFHEIZSYSTEM
SYSTÈME POUR CHAUFFER UN COMBUSTIBLE

(30) Priority: 20.02.2007 WO PCT/IB2007/000412
(43) Date of publication of application: 02.12.2009
(73) Proprietor: Revego Ltd., Tortola (VG)
(72) Inventor: VERHEIN, Miguel, 07190 Mallorca (ES)
(74) Representative: Høiberg A/S
(86) International application number: PCT/IB2007/004006
(87) International publication number: WO 2008/102203

(56) References cited:
- EP-A- 1 233 171
- WO-A-2006/095219
- DE-A1- 10 060 573
- DE-U1- 20 203 647
- DE-U1- 20 208 590
- FR-A- 2 616 716
- JP-A- 2004 092 631
- US-A- 4 192 457
- US-A- 5 205 250

## Description

### Field of the invention

The present invention provides a fuel heating system for preheating a vegetable oil based fuel for use in a diesel engine, said fuel heating system comprising a fuel tank, a heating device, a heat carrier arrangement comprising a liquid heat carrier, and a heat exchanger arranged inside said fuel tank, wherein said heating device is arranged to use vegetable oil based fuel from said fuel tank for heating the heat carrier, said heat carrier arrangement allows transport of hot heat carrier from said heating device to said heat exchanger and transport of cold heat carrier from said heat exchanger back to said heating device, and said heat exchanger is arranged to allow heat transfer from said heat carrier to said vegetable oil based fuel in said fuel tank.

### Background

Diesel fuel is a refined petroleum product used to power a large part of the modes of transportation in use today. At the current rate of consumption of petroleum derived products, the world's reserves of non renewable fossil fuels will be exhausted within a not distant future.

In addition to the apparent problem of the world's natural resources being limited, there is also the risk of more acute shortages and price increases due to different circumstances, such as natural disasters or war.

The use of fossil fuels also carries the inherent environmental problems associated therewith, such as a net addition in carbon dioxide contributing to global warming. Diesel fuel also produces relatively high amounts of particulate matter and toxic by-products upon combustion, e.g. SO₂.

For the above reasons, the search for alternative, more environmentally friendly fuels with the capacity to replace petroleum derived fuels in certain applications has intensified in recent years. Particular attention has been directed to the use of renewable resources, such as farm crops, for fuel production.

Furthermore, in the food industry, an increasing problem during the last years has been the disposal of used vegetable oils. Vast amounts of waste cooking oils are disposed each year by food processing and manufacturing plants as well as by domestic consumers. The environmental problems associated with disposal of large volumes of waste vegetable oils have grown to a point where they can not be overlooked.

Use of waste vegetable oils as fuel for diesel engines has been contemplated. However, pure vegetable oils have a number of disadvantages when used as engine fuels in conventional diesel engines, such as excessive engine wear, fuel injector coking, and high smoke values. Also, the high viscosity of vegetable oils, compared to petroleum based diesel fuel, makes their use impractical. In fact, at low temperatures commonly encountered during winters even in warm climates, but especially in cold climates, pure vegetable oil will present an almost solid appearance, making it impossible to use as fuel in conventional fuel systems designed for use with ordinary petroleum diesel.

Different approaches towards providing a practical way of using waste vegetable oils as diesel fuels have been sought out. Some have involved modification of the vegetable oil, chemically or physically, in order to conform the vegetable oil based fuel to the specifications required for use in a conventional diesel engine.

Chemically modifying vegetable oils, e.g. via reactive mixing with ozone or other oxidative agents, in order to obtain physical properties more similar to those of conventional diesel fuel, requires use of reactive chemicals and/or special equipment, making this approach relatively costly and increasing the environmental impact.

It would of course be advantageous if vegetable oil could be used without any chemical modification or addition of further components, such as petroleum based fuels, in order to improve combustion of the vegetable oil. Another way to improve combustion of vegetable oil based fuels is to preheat the oil prior to injecting it into the engine.

Japanese patent document JP 2004092631 A discloses a system for reducing viscosity of a vegetable oil in a diesel engine using vegetable oil as fuel. Viscosity of the vegetable oil is reduced by heating the oil using cooling water warmed up by the engine. At startup, the engine is first warmed up running on conventional fuel.

The approach of having two different fuel tanks, one for the vegetable oil, and one for the normal fuel used for starting and warming up the engine at startup, and for purging the engine from vegetable oil before shutting the engine off, carries a number of disadvantages. Obviously, the vehicle has to carry two fuel tanks, and the operator has to fill the two tanks with two different types of fuel. Often, finding space for fitting a second fuel tank in a vehicle is difficult without taking up valuable loading or passenger space. Furthermore, these arrangements require the driver of the vehicle to switch to the normal fuel a few minutes before turning the engine off in order to purge the vegetable oil from the engine. Failure to do so may render the engine impossible to start again once the engine has cooled down. Also, the startup phase of operating any engine will be the phase where the fuel consumption is the highest. Using fossil fuels in this phase will significantly decrease the environmental advantages of operating a vehicle on a renewable fuel.

German patent application DE 10060573 discloses a system for reducing viscosity of a vegetable oil in a diesel engine using vegetable oil as fuel. Viscosity of the vegetable oil is reduced by heating the oil using an electrical heater.

Using electrical means for heating the vegetable oil has the inherent disadvantage of requiring a source of electrical power. This power source may for example be the vehicle's own battery or it may be an external power source, such as a connection to the electrical mains. If the power supply is the vehicle's own battery, the battery would quickly become drained, unless the engine was already running to power the vehicle's generator. Thus, using the battery itself as a power source for heating the fuel is not a satisfactory solution. Connecting the electrical heating means to the electrical mains would solve this problem, but would instead limit the places in which the engine can be started to places in the vicinity of an accessible mains supply.

In diesel powered vehicles operating at low temperatures there is a problem with formation of small solid crystals in the diesel fuel, resulting In clogging of the fuel filter. This problem has been decreased by heating the fuel line or fuel filter.

US patent 5,205,250 A1 discloses an apparatus for preheating diesel fuel prior to feeding the fuel to the vehicle engine. Heating of the fuel is effected using engine coolant heated by a heater powered by diesel fuel from the fuel tank. Heating is effected on the fuel line between the fuel tank and the fuel filter. US 4 192 457 relates to a heater apparatus for heating the engine and fuel line of a vehicle. The heater apparatus operates on diesel fuel from the vehicles own fuel tank. US 4 192 457 does not mention vegetable oil based fuels or the specific problems related to operating diesel engines on such fuels. The international patent application W02006/095219 A1 describes a fuel system in which vegetable oil based fuel is heated in the fuel tank and in the fuel filter using warm engine coolant. In W02006/095219 A1 a parallel second fuel system containing conventional diesel fuel is proposed for use when starting the engine, and before shutting the engine off, to avoid the problems associated with vegetable oil based fuels at startup. German utility model DE 202 03 647 U1 describes a thermally insulated fuel tank comprising a heat exchanger arranged to heat the fuel in the fuel tank using hot engine coolant. French patent application FR 2 616 716 describes a device for heating diesel fuel and for preserving the temperature of the fuel, comprising a first thermally insulated fuel tank and a second thermally insulated fuel tank positioned inside said first fuel tank. The second fuel tank comprises a heater, which uses warm engine coolant for heating the diesel fuel in said second fuel tank. FR 2 616 716 does not address the problems associated with starting a diesel engine on cold vegetable oil based fuels. European patent application EP 1 233 171 describes a device for heating a viscous fuel for use in a combustion engine, wherein the fuel at startup is heated by electrical means until the temperature of the engine coolant is sufficient for heating the fuel.

In the light of the above cited prior art, there is a need for a new fuel heating system for vehicles running on renewable vegetable oil based fuels.

### Description of the invention

An object of the present invention is to provide a fuel heating device, which allows diesel engines to operate on vegetable oil based fuel regardless of the outside temperature.

Another object of the present invention is to provide a fuel heating device which heats the vegetable oil based fuel independently of external power sources.

Another object of the present invention is to provide a method for operating a diesel engine solely on vegetable oil based fuel.

Another object of the present invention is to provide a method which allows optimized combustion of a vegetable oil based fuel in a conventional diesel engine from the moment the engine is started.

Another object of the present invention is to provide a technically, environmentally and economically viable way of replacing conventional diesel fuel with renewable vegetable oil based fuel in existing diesel engines.

The above mentioned objects, as well as further objects of the invention, which should be apparent to a person skilled in the art after having studied the description below, are accomplished by the various aspects of the present invention.

In a first aspect thereof, the present invention provides a fuel heating system for preheating a vegetable oil based fuel for use in a diesel engine, said fuel heating system comprising a fuel tank, a heating device, a heat carrier arrangement comprising a liquid heat carrier, and a heat exchanger arranged inside said fuel tank, wherein said heating device is arranged to use vegetable oil based fuel from said fuel tank for heating the heat carrier, said heat carrier arrangement allows transport of hot heat carrier from said heating device to said heat exchanger and transport of cold heat carrier from said heat exchanger back to said heating device, and-said heat exchanger is arranged to allow heat transfer from said heat carrier to said vegetable oil based fuel in said fuel tank.

In an embodiment of the fuel heating system according to the invention, said heating device can be operated independently of the diesel engine.

In an embodiment of the fuel heating system of the invention, said heating device comprises a burner.

In an embodiment of the fuel heating system of the invention, said heating device comprises an electrically activated ignition device.

In an embodiment of the fuel heating system of the invention, said heating device comprises a heat exchange means for transferring heat from the heating device to the heat carrier.

In an embodiment of the fuel heating system of the invention, said heating device comprises a pump for effecting transport of hot heat carrier from said heating device to said heat exchanger and transport of cold heat carrier from said heat exchanger back to said heating device

In an embodiment of the fuel heating system of the invention, said heat exchanger inside the fuel tank is arranged within a distance of 20 cm from the opening through which fuel for the engine is aspirated. In another embodiment said distance is less than 10 cm. In yet another embodiment said distance is less than 5 cm. In yet another embodiment said distance is less than 1 cm.

In an embodiment of the fuel heating system of the invention, said heat carrier arrangement is an extension of the engine cooling system of the diesel engine, and said heat carrier and said engine coolant are the same.

The heating system of the present invention comprises a heating device arranged to be powered by vegetable oil based fuel from the fuel tank of the vehicle, a heat carrier arrangement arranged to transport heat generated by the heating device, and a heat exchanger arranged to transfer heat from the heat carrier to the vegetable oil based fuel in the fuel tank. In an embodiment of the invention, the fuel heating system is a stand alone system, capable of heating vegetable oil based fuel in the fuel tank independently of the diesel engine and the cooling system of said diesel engine.

The heating device preferably comprises a burner, a fuel line for supplying the burner with vegetable oil based fuel from the fuel system of the vehicle, an ignition device for igniting the fuel when the heating device is activated, a heat exchange arrangement allowing the hot combustion gas produced by the burner to heat a heat carrier present in the heat carrier arrangement, and an outlet for the exhaust gas. The heating device may for example comprise two separate channels arranged adjacent to each other, such that heat from a first medium passing through one of the channels may efficiently be transferred to a second medium passing through the second channel. Preferably, the first medium comprises hot combustion gases produced by the burner, and the second medium is a liquid heat carrier. Any one of a number of heat exchanger arrangements known in the art may be employed in a heating device according to the present invention. In an embodiment of the invention the heating device is a commercially available engine pre-heater, commonly used to preheat engines in cold climates in order to reduce fuel consumption and exhaust emissions. Heating devices, which may readily be incorporated in the fuel heating system, are available from a number of different manufacturers, such as Webasto and Eberspächer (both of Germany). The heating device may further comprise a pump capable of transporting the heat carrier through the heat carrier arrangement. Such a pump may for example be powered by the vehicle battery, by a separate battery for the heating system, or by a motor fuelled by the vegetable oil based fuel.

The burner may be any type of burner suitable for ignition and combustion of a liquid fuel received from a fuel source.

The ignition device is preferably capable of being activated electrically. When it is activated,-the ignition device should be capable of generating a temperature sufficiently high to ignite a vegetable oil based fuel present in the burner. This temperature may for example be between 200-800 °C. The temperature may also be higher than 800 °C, such as between 800-2000 °C. Typically, the temperature will be between 500-1500 °C. The temperature generated by the ignition device should be sufficiently high to quickly heat and ignite fuel present in the burner. The ignition device may preferably be powered by the vehicle battery or by a separate battery for the heating system. Ignition devices suitable for use with the present invention may for example be commercially available ignition devices, such as glow plugs. In an embodiment, the heating device of the present invention comprises a glow plug and/or a glow pin. Other ignition devices providing essentially the same result may also be available. In an embodiment of the invention, the ignition device may be activated using an electrical switch arranged in the passenger compartment of the vehicle. In another embodiment, the ignition device may be activated using a timer mechanism.

The heating device may preferably be arranged near the fuel tank in order to minimize the length of the fuel line supplying fuel to the heating device and the length of tubing supplying hot heat carrier from the heating device to the heat exchanger in the fuel tank. In an embodiment, the heating device is arranged directly adjacent to the fuel tank.

The heating device may preferably be arranged to operate on viscous fuels, such as vegetable oil.

In an embodiment, the heating device may further comprise a pump arranged to feed fuel into the burner. The pump should be designed to allow pumping of relatively high viscosity fuels, such as pure vegetable oil. Preferably, said pump is a high pressure pump capable of providing a pressure sufficient for feeding viscous vegetable oil based fuel into the burner at an acceptable flow rate. The heating device may further comprise a nozzle through which the fuel is passed when it enters the burner. When the fuel is pumped through the nozzle, the fuel is mixed with air, resulting in formation of a mist of fuel droplets in the burner. The composition of fuel and air in the mist, and the size distribution of the fuel droplets, may affect the combustion properties in the burner and will depend on the fuel being is used. In a heating device for use in the present invention, the size and shape of the nozzle in combination with the pressure and feed rate of the fuel being fed through the nozzle should be arranged to provide a suitable composition of fuel and air in the mist, and size distribution of the fuel droplets, for a high viscosity fuel such as a pure vegetable oil. The heating device may further comprise a filter through which the fuel is passed before it reaches the nozzle. The filter removes solid material from the fuel before it is fed through the nozzle. A filter for use in the present invention should be suitable for use with a high viscosity fuel such as a pure vegetable oil. If the pore size of the filter is too small, the pressure drop over the filter will be too high, the filter will become clogged, and the fuel supply to the burner will be interrupted. Burners conventionally used with petroleum diesel may not work well with pure vegetable oil, since the pump and nozzle and filter of such burners are designed for use only with low viscosity fuels and not for use with high viscosity fuels such as a pure vegetable oil. Thus, in an embodiment of the fuel heating system of the invention, said heating device is arranged to operate on pure vegetable oil.

The heating device may comprise a control unit or thermostat connected to one or more temperature sensors arranged in the fuel system or heat carrier system and capable of controlling the activity of the burner. If the temperature of the fuel rises above a set value, the control unit will automatically switch the burner off or switch the burner to idle mode, allowing the fuel in the fuel system to cool down. When the temperature reaches below the set value, the burner will automatically be switched on again to keep the fuel temperature at the set value. The control unit may for example be arranged to control the temperature of the ignition device. The control unit may also be arranged to control the amount of fuel, and the composition of the mixture of fuel and air, to be injected into the burner. Temperature sensors may be placed anywhere in the fuel system, for example in the fuel tank, fuel line, fuel filter or in the heat carrier system. Especially, a temperature sensor may be placed in the engine cooling system to monitor the temperature of the cooling water, making sure that the engine does not become overheated.

The heat carrier arrangement is a sealed system of tubing containing a liquid heat carrier. The heat carrier arrangement is arranged to allow transport of hot heat carrier liquid from the heat carrier discharge end of the heating device to the inlet of the heat exchanger, and cool heat carrier from the outlet of the heat exchanger to the inlet of the heating device, thus forming a closed system. In an embodiment, the heat carrier arrangement is a stand alone arrangement, separated from the vehicle's cooling system. In another embodiment, the heat carrier arrangement forms a part of the engine cooling system normally present in a diesel engine arrangement. If this is the case, the cool heat carrier from the outlet of the heat exchanger would flow via the engine cooling system back to the inlet of the heating device. Once the engine has been started, excess heat from the engine may replace the heat generated by the heating device. Thus, when the engine is operating, the heating device may be switched off and instead, heat generated by the engine may be used to heat the vegetable oil based fuel in the fuel tank. In an embodiment wherein the heat carrier arrangement forms a part of the engine cooling system, the heat carrier arrangement may be provided with a system of valves allowing the heated heat carrier/coolant to recirculate either in the fuel heating system only, or in the entire fuel heating/engine cooling system. This would allow the heat generated by the heating device to be used solely for heating of the vegetable oil based fuel in the fuel tank, or for heating other components of the diesel engine arrangement as well.

The heat carrier is preferably a liquid having properties which makes it suitable for heat transfer in a fuel heating system according to the invention. The heat carrier should be non flammable and have a boiling point making it suitable for safe heating of the fuel present in the fuel tank. Examples of suitable heat carriers are all liquids commonly used as coolants for engines. In an embodiment, the heat carrier is water based. The heat carrier may further comprise a compound for decreasing the freezing point of the heat carrier.

The heat exchanger is arranged to allow efficient heat transfer from the hot heat carrier to the cold vegetable oil based fuel present in the fuel tank. The heat exchanger of the present invention is arranged inside the fuel tank. The walls of the fuel tank may be provided with fittings allowing the tubing of the heat carrier arrangement to be connected to the heat exchanger inside the fuel tank. The heat exchanger may be of any kind known in the art allowing efficient heat transfer from a heat-carrier flowing through the heat exchanger to a fluid or solidified medium in which the heat exchanger is immersed. Usually such a heat exchanger will have a relatively large surface area exposed to the medium which is to be heated. The heat exchanger may be positioned anywhere inside the fuel tank. In an embodiment of the invention the heat exchanger is positioned in the vicinity of the area in the fuel tank where vegetable oil based fuel is aspirated by the fuel line for transport to the engine and/or heating device. This allows quicker heating of the fuel to be used first. In a preferred embodiment, the distance between said heat exchanger and said area in the fuel tank where vegetable oil based fuel is aspirated by the fuel line is less than 20 cm. In another embodiment said distance is less than 10 cm. In yet another embodiment said distance is less than 5 cm. In yet another embodiment said distance is less than 1 cm. This positioning of the heat exchanger allows the engine to aspirate fuel very shortly after the fuel heating system has been switched on.

The fuel heating system of the invention may also comprise one or more sensors for regulating the temperature obtained in the system. For example, once heating of the fuel to a desired temperature has been effected, the system may be arranged to automatically turn the heating device off in order to avoid overheating of the fuel. The desired temperature will depend on the fuel and engine used as well as other factors.

Some or all of the components of the fuel heating system may be partially or completely encased in a suitable heat insulating material in order to minimize heat loss to the surrounding atmosphere.

Methods and arrangements for heating conventional petroleum based diesel fuel have focused on avoiding clogging of the fuel filter by paraffin crystals formed in the diesel at low temperatures. These methods and arrangements generally involve heating of the fuel line leading to the fuel filter or heating of the fuel filter itself. This may be sufficient when conventional petroleum diesel is used, since a major proportion of this fuel will remain in liquid form even at very low temperatures. Vegetable oil, or fuels based primarily on vegetable oil, however, will become viscous or even solidify at lower temperatures. The temperature at which a certain type of vegetable oil or mixture of different types of oil, solidifies will vary depending on the specific oil(s). For example rapeseed oil will solidify at -10 °C, while coconut oil will solidify already at 17 °C.

The inventor has found that when the vegetable oil based fuel in the fuel tank is very viscous, or even in solid form at low outside temperatures, it will not be sufficient to apply the technical solutions provided for use with conventional petroleum based diesel, since these solutions will not defrost a substantially solid vegetable oil based fuel present in the fuel tank and fuel system of a vehicle.

The present inventor has found that, contrary to prior knowledge, a heater, which operates on the vehicle's own fuel, and which is normally used for heating the engine block using the engine coolant, may be used for heating very viscous or solidified vegetable oil based fuel present in the fuel tank of the vehicle. The fuel in the fuel line providing fuel to the burner of the present invention will also be very viscous or solid at low temperatures, and hence it would not be expected that the burner would be operable at such temperatures. The approaches towards solving this problem in the prior art have instead been directed towards direct electrical heating of the fuel, or towards use of a second fuel for starting and warming up the engine. These are methods that carry inherent disadvantages as discussed above.

The present inventor has shown that a heater, which operates on the vehicle's own fuel indeed can be used for heating vegetable oil based fuel in a vehicle fuel tank. The burner of the present invention is preferably provided with an ignition device providing sufficient heat to quickly melt solidified fuel present in the burner and in the fuel line providing the burner with fuel, and ignite the fuel to start the burner. Because the burner consumes very small amounts of fuel, remaining plugs of solid fuel in the fuel line providing the burner with fuel will not cause the flame of the burner to die out due to lack of fuel. As the burner operates, the fuel line providing the burner with fuel will eventually heat up to melt any remaining plugs of solid fuel blocking said fuel line. A commercially available heating device, which may be used with the present invention, generally may consume as little as about 0.3 liters of vegetable oil based fuel per hour during operation. The fuel consumption may also be lower than 0.3 liters per hour depending on the configuration and effect of the heating device. This may be compared to the amount of fuel consumed by a diesel engine used in a bus or trailer truck during the start up phase of the engine, which may be many times higher. This low fuel consumption of the heating device of the invention explains how the heating device can operate even when the fuel in the heating device fuel line is solid or very viscous at lower temperatures.

A further advantage of using a fuel heating system according to the present invention is that the vegetable oil based fuel in the fuel tank may be heated to a temperature at which optimal combustion properties are obtained when the fuel is injected into a diesel engine.

The fuel heating system of the present invention may be expanded to also allow preheating of any additional component of the engine and fuel system of a vehicle, such as, but not limited to, the fuel line, fuel filter and engine block. This allows for the entire fuel system to be preheated to a temperature which provides greatly improved combustion conditions already before the engine is started.

The possibility to control the temperature of the fuel being injected into the engine allows optimization of the combustion. This results in an exhaust from the engine containing less harmful components. Vegetable oils intrinsically comprise less components liable to give rise to toxic exhausts upon combustion, such as halogens, sulfur and heavy metals, compared to conventional petroleum based fuels, such as diesel fuel or gasoline. A vegetable oil based fuel in combination with heating of the fuel prior to injection into the engine provides a method giving very low emissions of harmful components, such as THC:s and SO₂, as disclosed in the example below. Heating also lowers the viscosity of the vegetable oil based fuel, circumventing problems associated with using a high viscosity fuel in an internal combustion or compression ignition engine.

The fuel heating system of the present invention may further comprise a device for further improving the heating of vegetable oil based fuel for use in a diesel engine. One such device may be a thermopreservation device. In an embodiment, such a thermopreservation device may comprise a thermally insulated container arranged to accommodate a volume of vegetable oil based fuel which is significantly smaller than the volume of the fuel tank.

The thermally insulated container may be any type of container designed for keeping the contents of the container at a certain temperature for a prolonged period of time. An example of such a container comprises an inner container of glass or metal having a highly reflective inner surface preventing heat radiation from leaving the container, and an outer housing separated from the inner container by an insulating layer. The insulating layer is comprised by a material having a low heat conductivity. The insulating layer may for example comprise a gas, such as air, or a porous material having a low heat conductivity, or it may be vacuum.

The thermally insulated container may for example have an internal volume of from 0.1 to 10 litres. The volume may preferably be from 0.3 to 5 litres.

The thermopreservation device may be provided with means for heating fuel present inside the thermally insulated container. Said means for heating may for example be in the form of an immersion heater. Such an immersion heater may be heated by direct electrical heating or via a circulating heating medium. In an embodiment, the immersion heater is in the form of a tube shaped loop through which a heating medium may be passed, allowing heat from the heating medium to be transferred to fuel present in the container. Connections of the heating means to the thermally insulated container should be made thermally insulated such that heat is prevented from escaping from the inside of the container via the connections of the heating means. This is especially important when the immersion heater comprises a material having a high heat conductivity, such as a metal having a high heat conductivity. In another embodiment, the immersion heater is in the form of an electrical heater which may be powered for example by the vehicle battery. The heating means may also comprise heating means arranged in the thermal insulation of the container and in contact with the wall of the inner container, allowing heat from said heating means to be transferred to the fuel present inside the inner container. The heating means may be arranged to be heated electrically or by a circulating heating medium.

In an embodiment of the thermopreservation device in which the heating is effected by a circulating heating medium, the heating medium may be the same heating medium as that used by the fuel heating system of the present invention. In an embodiment, the heating medium is the heating medium of the diesel engine cooling system.

The thermopreservation device may be arranged in-line with the fuel heating system of the present invention. Particularly, the thermopreservation device may be arranged such that hot heat carrier from the heating device of the invention is circulated into the heating means of the thermally insulated container, thus heating fuel present inside the container. Heat carrier discharged from the heating means of the container may be either directed to the heat exchanger in the fuel tank or recirculated to the heating device to be heated again. The thermopreservation device may also be arranged such that a portion of the heat carrier from the heating device is directed to the heating means of the thermally insulated container and another portion of the heat carrier is directed to the heat exchanger inside the fuel tank. The proportions of heat carrier directed to the heating means of the thermally insulated container and to the heat exchanger inside the fuel tank-may be controlled for example by a three way valve or by a T-connection pipe with suitable inner dimensions based on empirical investigation.

The thermally insulated container may be connected to the fuel tank to allow fuel from the fuel tank to fill up the container. This may be done by arranging the container at a lower point than the fuel tank, thus allowing fuel from the fuel tank to be transported into the container by means of gravity. The transport of fuel from the fuel tank into the container may also be facilitated by use of an externally applied pressure, for example applied by a pump, allowing the container to be placed in any position relative to the fuel tank. The thermopreservation device may preferably be arranged near the fuel tank in order to minimize the length of the fuel line supplying fuel to the thermopreservation device. In an embodiment, the heating device is arranged directly adjacent to the fuel tank. The thermopreservation device may preferably be arranged near the heating device in order to minimize the length of the fuel line supplying fuel to the heating device. In an embodiment, the heating device is arranged directly adjacent to the thermopreservation device. The thermopreservation device may preferably be arranged above and in direct contact with the heating device, allowing fuel from the thermopreservation device to be fed to the heating device by means of gravity. Thus, in one embodiment the thermopreservation device is arranged between the fuel tank and the heating device.

One advantage of a thermopreservation device for further improving the heating of vegetable oil based fuel is that under outside temperatures at which a vegetable oil based fuel would normally solidify, it allows a portion of vegetable oil based fuel to remain at a temperature at which it is essentially liquid for an extended period of time. The fuel in the thermally insulated container may be used as fuel for the heating device and/or as fuel for the diesel engine. Another advantage of the thermopreservation device is that the relatively small volume of fuel present in the thermally insulated container can be very quickly heated to the required operating temperature using either an electrical heater or the heating device of the present invention. The thermally insulated container is especially useful under cold or extremely cold weather conditions, where fuel present in the fuel system may quickly cool down and become viscous after the engine and/or heating device have been turned off. The thermopreservation device is also useful under common mild and warm weather conditions, as it allows a portion of the fuel to be kept at an elevated temperature for a prolonged period of time and thus reduces the time required for heating the fuel to the optimal operating temperature. Thus, in an embodiment, the fuel heating system of the invention further comprises a thermopreservation device arranged to accommodate a portion of the vegetable oil based fuel in the fuel system and arranged to maintain said vegetable oil based fuel at an elevated temperature for an extended period of time. In another embodiment said thermopreservation device comprises a thermally insulated container. In another embodiment said thermopreservation device comprises heating means, arranged to heat fuel present inside the thermopreservation device. In another embodiment said heating means comprise an immersion heater. The thermopreservation device may preferably be arranged to receive fuel from the fuel tank, -and to deliver fuel to the fuel heating device and/or the diesel engine.

A fuel system according to the present invention may also comprise an additional heat source in the form of a solar panel or solar collector. Said solar panel or solar collector may comprise a photovoltaic device for converting solar energy into electric energy and/or a device in which solar energy is absorbed in a recirculating liquid or gaseous heat carrier. The solar panel or solar collector may preferably be arranged on the outside of the vehicle comprising the fuel system, such as for example on the roof or engine hood. It may also be arranged inside the vehicle in a position which is exposed to sunlight, such as for example on the dashboard panel.

The solar heating may be used for heating the fuel in any part of the fuel system. In an embodiment, the fuel is heated in the fuel tank. In another embodiment, in which the fuel system comprises a thermo preservation device, the fuel is heated inside the thermally insulated container. Heating the fuel inside the thermally insulated container has the additional advantage of allowing a small amount of fuel to be heated using a relatively small amount of energy.

In an embodiment, electric energy obtained from a photovoltaic solar panel is used for electric heating of vegetable oil based fuel in the fuel system.

A device in which solar energy is absorbed in a recirculating liquid or gaseous heat carrier usually comprises a circuit of tubing containing a heat carrier and a pump for recirculating the heat carrier through said circuit. Heat from the heat carrier may thereafter be transferred to fuel present in the fuel system. Any heat carrier suitable for use with solar collectors may be used. Examples of suitable heat carriers are familiar to a person skilled in the art. In an embodiment, the heat carrier is the engine coolant.

In another embodiment, the fuel system comprises a solar collector containing a heat carrier and comprising an electrical pump for recirculating the heat carrier through the solar collector, and a photovoltaic solar panel arranged to provide electric power for the pump. In such a fuel system, the solar heating may be operated independently of any other source of energy than sunlight.

With an embodiment of the invention comprising a solar panel or a solar collector or a combination thereof, a portion of vegetable oil based fuel may be kept at a temperature at which it is essentially liquid for extended periods of time, even at outside temperatures that would normally cause the vegetable oil based fuel to solidify.

The fuel heating system of the present invention may optionally comprise a second heating device. In said second heating device, the fuel may be further heated to a second temperature before it is injected into the diesel engine. Said second heating device is preferably activated when the diesel engine is running. Said second heating device may comprise electrical means for heating the fuel, or it may comprise means for heating the fuel using hot coolant from the engine cooling system. In an embodiment, said second heating device is a fuel filter, constructed so as to allow heat from engine coolant to be transferred to the fuel, via a heat exchanging arrangement. A fuel filter suitable for use with the present invention is described in more detail in WO 2006/095219 of the same inventor. Heating in the fuel filter enables accurate regulation of the temperature of the fuel being injected into the engine. The temperature of the fuel as it leaves the fuel filter may be controlled to an error margin of within about 1 °C.

When using vegetable oil as fuel for a diesel engine, it is very important to remove particulate matter from the fuel before injecting it into the engine. Therefore, it is important to select a suitable fuel filter for use in a fuel heating system according to the present invention. Vegetable oil also generally comprises water in different concentrations. Water in fuel used in an internal combustion engine, even in small amounts, can be very harmful to the engine. It is therefore desirable that water present in the vegetable oil based fuel can be removed prior to injection into the engine. In this embodiment of a fuel system according to the invention, this may e.g. be achieved by the use of a fuel filter utilizing a turbine centrifuge, in which water and particulate matter is separated from the vegetable oil based fuel to an extent allowing injection of the filtrated vegetable oil based fuel into the engine, without risk of damage to the engine. Other types of fuel filters may of course also be used.

In another aspect thereof, the present invention provides a method for heating a vegetable oil based fuel for use in a diesel engine using a fuel heating system according to the first aspect of the invention, said method comprising the steps of:
a) activating the heating device and recirculation of the heat carrier in the heat carrier arrangement,
b) heating the heat carrier in the heat carrier arrangement using heat generated in the heating device,
c) transferring heat from the hot heat carrier to a vegetable oil based fuel present in the fuel tank by means of the heat exchanger,
d) recirculating the cool heat carrier from the heat exchanger to the heating device, and
e) repeating steps b)-d) until a desired temperature is reached in the vegetable oil based fuel present in the fuel tank.

In an embodiment, at least a portion of the vegetable oil based fuel present in the fuel tank is heated to a temperature of 20-100 °C, preferably to a temperature of 40-80 °C, more preferably to a temperature of 60-80 °C. At these temperatures, all vegetable oils commonly used as fuel will be in liquid form, allowing them to be transported through a vehicle fuel system. The vegetable oil based fuel in the fuel tank may also be heated to a higher temperature in order to achieve improved combustion of the fuel when it is injected into a diesel engine. In another embodiment, at least a portion of the vegetable oil based fuel present in the fuel tank is heated to a temperature of 50-100 °C, preferably to a temperature of 70-90°C, more preferably to a temperature of 80-85 °C and most preferably to a temperature of about 83 °C. However, it is also possible, in a fuel heating system according to the present invention, to heat the fuel to higher temperatures, such as up to 150 °C.

The method of the present invention may further comprise a second heating step, wherein the fuel is heated to a second temperature before it is injected into the engine.

In a more specific embodiment, said second heating step comprises heating of the vegetable oil based fuel in a fuel filter as described above. In another more specific embodiment, said second heating is effected using warm engine coolant from the engine cooling system. In yet another embodiment, said second heating is effected electrically. Said second temperature may for example be in the range of 50-100 °C. Said second temperature is preferably in the range of 70-90 °C, more preferably in the range of 80-85 °C, and most preferably about 83 °C. However, it is also possible, in a fuel heating system according to the present invention, to heat the fuel to higher temperatures, such as up to 150 °C.

Use of a sequential heating process, such as provided by this aspect of the invention, allows for accurate control of the final temperature of the fuel before injection thereof into the engine. Accurate control of the temperature as provided by the present invention is essential in obtaining optimal combustion conditions and thereby optimal combustion with a minimum of undesired combustion by-products.

In an embodiment of the invention, the fuel lines are also heated.

In some embodiments, the heating of the fuel filter and/or the fuel tank and/or the fuel lines may also be effected electrically.

In a third aspect thereof, the present invention relates to the use of a fuel heating system according to the first aspect of the invention for heating a vegetable oil based fuel for use as fuel for a diesel engine.

In an embodiment, said vegetable oil based fuel comprises more than 90 % by weight of vegetable oil. Preferably said vegetable oil based fuel comprises more than 95 % by weight of vegetable oil. More preferably, said vegetable oil based fuel comprises more than 99 % by weight of vegetable oil.

In another embodiment, at least a part of said vegetable oil based fuel is present in solid form before heating is effected and said vegetable oil is present in liquid form after heating is effected.

Another aspect of the present invention relates to a fuel system for providing a diesel engine with a vegetable oil based fuel, said fuel system comprising a fuel tank containing a vegetable oil based fuel, a fuel heating system according to the first aspect of the present invention, an engine cooling system comprising a recirculating engine coolant, a fuel line connecting the tank with the engine, and a fuel filter arranged on said fuel line, said fuel filter being arranged with said cooling system so as to allow heat transfer in the fuel filter from the recirculating engine coolant to the fuel provided from the fuel tank to the engine, wherein said fuel heating system is arranged to heat vegetable oil based fuel present in the fuel tank.

By use of the term "diesel engine" herein is meant any internal combustion engine normally designed to operate on conventional petroleum -based diesel fuel.

By use of the term "fuel" herein is meant any liquid or gaseous combustible substance, which can be used to provide power to an internal combustion engine upon combustion. Examples of fuels include, but are not limited to diesel, gasoline, kerosene and vegetable oil.

By use of the term "vegetable oil based fuel" herein is meant a composition comprised mainly (>90 %) of a vegetable oil or a mixture of different vegetable oils. The "vegetable oil based fuel" may further comprise minor amounts (< 10 %) of additives, such as, but not limited to, the additives mentioned hereinbelow.

By use of the term "vegetable oil" herein is meant a naturally occurring composition comprised mainly of glycerol esters of fatty acids such as, but not limited to, caproic, caprylic, capric, lauric, myristic, palmitic, palmitoleic, stearic, isostearic, oleic, linoleic, linolenic, arachidic, gadoleic, behenic and erucic acids and combinations thereof, as well as synthetically modified derivatives thereof. Non-limiting examples of useful fats and oils are soybean oil, rapeseed oil, oiticica oil, tung oil, castor oil, tall oil, olive oil, palm oil, safflower oil, sesame oil, sunflower oil, linseed oil, babassu oil, coconut oil, palm kernel oil, corn oil, cottonseed oil, groundnut oil, jatropha oil, oil derived from algae, and mixtures of two or more thereof. Vegetable oil useful as vehicle fuel is often referred to as SVO (straight vegetable oil), PPO (pure plant oil) or DIN 51605.

By use of the term "recycled vegetable oil" herein is meant a vegetable oil as defined above, that has previously been used for a purpose other than as fuel. Non-limiting examples of sources for waste vegetable oil include different processes involved in food preparation, such as frying and conservation.

Additives that may be present in a vegetable oil based fuel may for example include a terpene compound or a vegetable based organic solvent comprising a terpene compound. By use of the term "terpene compound" herein is meant a naturally occurring organic compound, biologically built from the naturally occurring monomer called isoprene, C₅H₈, which is found as a volatile oil in plants. By use of the term "terpene compound" herein is also meant a terpenoid compound, i.e. alcohols, aldehydes, ketones or carboxylic acids of terpenes. Examples of terpene compounds include, but are not limited to, monoterpenes, such as α-pinene and β-pinene, nerol, citral, camphor, menthol and limonene, sesquiterpenes, such as nerolidol and farnesol, diterpenes, such as phytol, and mixtures of two or more terpenes. By use of the term "vegetable based organic solvent comprising a terpene compound" herein is meant an organic solvent comprising a terpene as defined above, which solvent has not, directly or indirectly, been derived from a petroleum raw material. Examples of such "vegetable based organic solvents comprising a terpene compound" include but are not limited to turpentine and other vegetable extracts containing terpenes and terpenoids, e.g. monoterpenes, such as α-pinene and β-pinene, nerol, citral, camphor, menthol and limonene, sesquiterpenes, such as nerolidol and farnesol, diterpenes, such as phytol, and mixtures of two or more terpenes. The vegetable oil based fuel may also include minor amounts of other additives.

### Brief description of the drawings

Figure 1 shows a scheme of the components present in a fuel heating system according to an embodiment of the invention.
Figure 2 shows a scheme of the components present in a fuel heating system further comprising a heated fuel filter according to an embodiment of the invention.
Figure 3 shows a scheme of the components present in a fuel heating system according to an embodiment of the invention further comprising a thermopreservation device provided with heating means.

### Embodiments

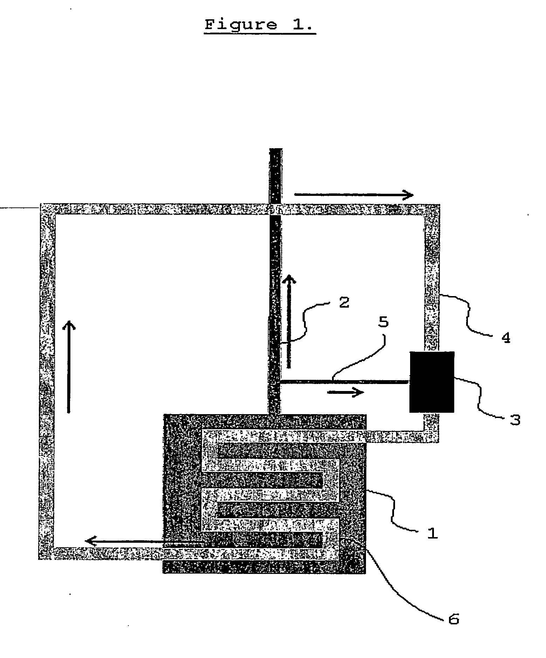

An embodiment of a fuel heating system according to the invention is disclosed in Figure 1. The fuel heating system comprises a fuel tank (1) containing a vegetable oil based fuel, a fuel line (2) leading from the fuel tank to the fuel inlet of the diesel engine. The fuel heating system further comprises a heating device (3) and a heat carrier arrangement (4), containing a liquid heat carrier. When the heating device is activated, it uses vegetable oil based fuel supplied from the fuel tank via the heating device fuel line (5) for heating the heat carrier. The heat carrier is recirculated in the heat carrier arrangement by means of a pump. The hot heat carrier from the heating device enters the heat exchanger (6) positioned inside the fuel tank where it is used to heat the fuel present in said fuel tank before being recirculated to the heating device.

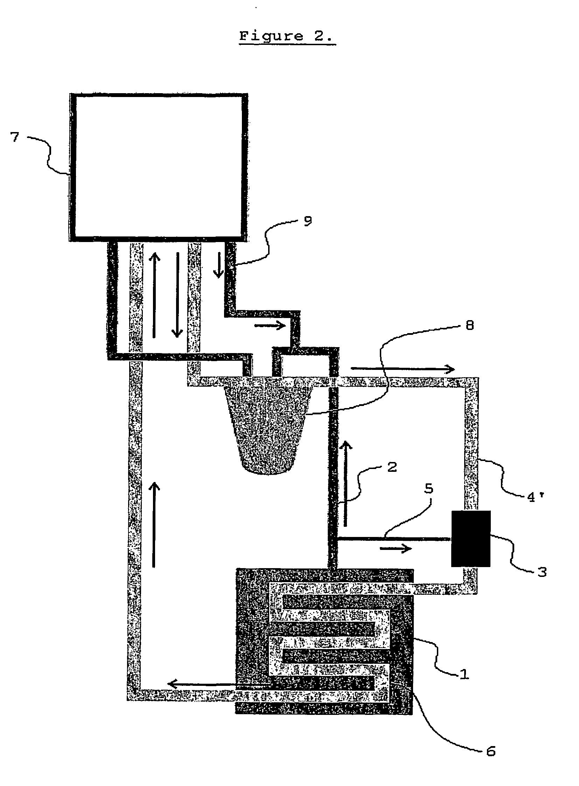

Another embodiment of a fuel system comprising a fuel heating system according to the invention is disclosed in Figure 2. The fuel system comprises a diesel engine (7), a fuel tank (1) containing a vegetable oil based fuel, a fuel line (2) leading from the fuel tank to a fuel filter (8) and from said fuel filter to the fuel inlet of the diesel engine. The fuel system further comprises an engine cooling system (4') containing an engine coolant, and a heating device (3). When the heating device is activated, it uses vegetable oil based fuel supplied from the fuel tank via the heating device fuel line (5) for heating the engine coolant. The engine coolant is recirculated in the engine cooling system by means of a pump. The hot coolant from the heating device enters the heat exchanger (6) positioned inside the fuel tank where it is used to heat the fuel present in said fuel tank before being recirculated to the engine. If the engine is hot, the engine coolant is heated by the engine. The heated coolant leaving the engine is led to the fuel filter and used in a heat exchanging arrangement in the fuel filter to heat vegetable oil based fuel present in the filter. The engine coolant used to heat the vegetable oil based fuel in the fuel filter is then recirculated to the heating device. If the engine is cold, heat remaining in the coolant when it leaves the heat exchanger in the fuel tank will heat the engine. Excess fuel from the engine is returned to the fuel filter or to the fuel tank via a return fuel line (9).

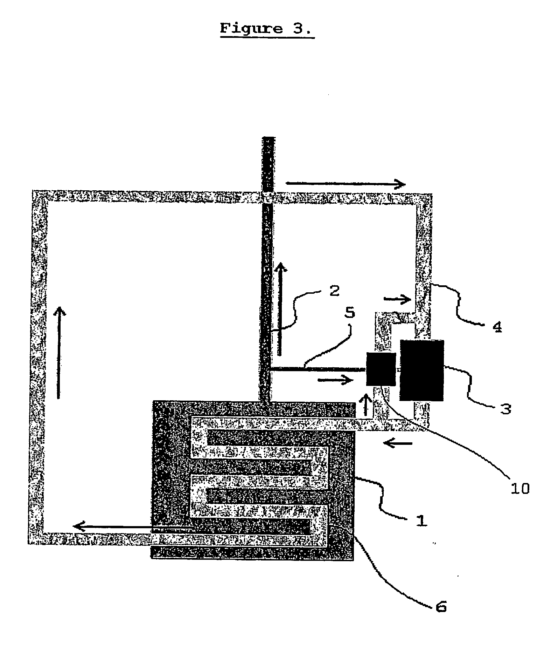

An embodiment of a fuel heating system according to the invention comprising a thermopreservation device is disclosed in Figure 3. The fuel heating system comprises a fuel tank (1) for a vegetable oil based fuel, a fuel line (2) leading from the fuel tank to the fuel inlet of the diesel engine. The fuel heating system further comprises a heating device (3) and a heat carrier arrangement (4), containing a liquid heat carrier. When the heating device is activated, it uses vegetable oil based fuel supplied from the thermopreservation device (10) for heating the heat carrier. As fuel in the thermopreservation device is consumed by the heating device, it is replaced by new fuel supplied from the fuel tank via the heating device fuel line (5). The heat carrier is recirculated in the heat carrier arrangement by means of a pump. One portion of the hot heat carrier from the heating device enters the heat exchanger (6) positioned inside the fuel tank where it is used to heat the fuel present in said fuel tank before being recirculated to the heating device. Another portion of the hot heat carrier from the heating device enters the heating means of the thermopreservation device (10) arranged between the fuel tank and the heating device. Heat is transferred from the heat carrier to fuel present inside the thermopreservation device and cool heat carrier is recirculated to the heating device.

### Example 1

The following example demonstrates the usefulness of a fuel heating system according to the invention.

In a conventional diesel engine (Mitsubishi L200 4X4, 4D56 (Turbo variable, Intercooler), year of manufacture 1998), two different fuels, a vegetable oil based fuel (a) consisting of 96,8 % by weight of a recycled, filtrated vegetable oil (mixture of different vegetable oils, mainly sunflower oil) and 3,2 % of turpentine (industrial grade), and a conventional petroleum based diesel fuel (b), were evaluated with regard to the content of a number of components present in the exhaust fumes produced upon combustion of the fuels in the diesel engine.

The diesel engine was operated alternately on fuels (a) and (b). Fuel (a) was heated in a fuel filter prior to injection into the engine, using warm engine coolant from the engine cooling system to heat the fuel in said filter. The temperature of the vegetable oil based fuel upon injection into the engine was approximately 83 °C.

Fuel (b) was provided to the engine in a conventional way, via a diesel fuel filter, without heating of the fuel prior to injection into the engine.

Exhaust fumes from the engine were analyzed for THC (total hydrocarbons), SO₂ and CO₂. THC, SO₂ and CO₂ were evaluated according to the standard testing procedures EPA (US Environmental Protection Agency) N°1, VDI 3481 and EPA CTM-30.

Measurements were conducted at engine rotational speeds of 2000 and 3000 rpm. All measurements were performed in triplicate in order to provide values with statistical significance. Measurements were performed at ambient temperature and pressure. The results of the measurements are presented in Table 1 below.

**Table 1.**

| | Diesel | | Vegetable oil based fuel | |
|---|---|---|---|---|
| | 2000 rpm | 3000 rpm | 2000 rpm | 3000 rpm |
| THC [ppm] | 135 | 138 | 58 | 25 |
| SO₂ [ppm] | 4 | 3 | 1 ¹⁾ | 1 ¹⁾ |
| CO₂²⁾[%] | 1,3 | 1,5 | 1,1 | 1,0 |

| | | | | |
|---|---|---|---|---|
| 1) Value too low to detect 2) Calculated CO₂-concentration | | | | |

The results in Table 1 show that with a heated vegetable oil based fuel, a lower total hydrocarbon content (THC) was produced, compared to the conventional diesel fuel, indicating better combustion. The levels of sulfur dioxide were significantly lower for the vegetable oil based fuel than for the diesel fuel. The levels of sulfur dioxide in the exhaust from the vegetable oil based fuel were actually to low to be determined by the methods used in this study.

No differences in the behavior of the engine when running on the vegetable oil based fuel and when running on the diesel fuel were observed. The color of the exhaust gas, and the amount of smoke was the same for the two fuels.

The conclusion of the study is that a preheated vegetable oil based fuel can be used as a cleaner, CO₂-neutral substitute for conventional petroleum based diesel fuels without further modification of the diesel engine.

### Example 2

Example 2 was performed the same as Example 1, but with the exception that straight vegetable oil (standard according to DIN 51605) was used instead of the vegetable oil/turpentine mixture. No differences in the behavior of the engine when running on the straight vegetable oil and when running on the diesel fuel were observed. The color of the exhaust gas, and the amount of smoke was the same for the two fuels. The results of Example 2 corresponded closely to the results obtained with the vegetable oil based fuel in Example 1.

## Claims

1. Fuel heating system for preheating a vegetable oil based fuel for use in a diesel engine, said fuel heating system comprising a fuel tank (1), a heating device (3), a heat carrier arrangement comprising a liquid heat carrier (4), and a heat exchanger (6) arranged inside said fuel tank, wherein said heating device comprises a burner arranged to use vegetable oil based fuel from said fuel tank for heating the heat carrier, and said burner comprises an ignition device capable of providing sufficient heat to melt and ignite solidified vegetable oil based fuel present in the burner, said heat carrier arrangement allows transport of hot heat carrier from said heating device to said heat exchanger and transport of cold heat carrier from said heat exchanger back to said heating device, and said heat exchanger is arranged to allow heat transfer from said heat carrier to said vegetable oil based fuel in said fuel tank.

2. Fuel heating system according to claim 1, wherein said heating device can be operated independently of the diesel engine.

3. Fuel heating system according to any one of the preceding claims, wherein said heat exchanger inside the fuel tank is arranged within a distance of 20 cm from the opening through which fuel for the engine is aspirated.

4. Fuel heating system according to any one of the preceding claims, wherein said heat exchanger inside the fuel tank is arranged within a distance of 10 cm from the opening through which fuel for the engine is aspirated.

5. Fuel heating system according to any one of the preceding claims, wherein said heat exchanger inside the fuel tank is arranged within a distance of 5 cm from the opening through which fuel for the engine is aspirated.

6. Fuel heating system according to any one of the preceding claims, further comprising a thermopreservation device (10) arranged to accommodate a portion of the vegetable oil based fuel in the fuel system and arranged to maintain said vegetable oil based fuel at an elevated temperature for an extended period of time.

7. Method for heating a.vegetable oil based fuel for use in a diesel engine using a fuel heating system according to any one of the preceding claims, said method comprising the steps of:
a) activating the heating device (3) and recirculation of the heat carrier in the heat carrier arrangement (4),
b) heating the heat carrier in the heat carrier arrangement using heat generated in the heating device,
c) transferring heat from the hot heat carrier to a vegetable oil based fuel present in the fuel tank (1) by means of the heat exchanger (6),
d) recirculating the cool heat carrier from the heat exchanger to the heating device, and
e) repeating steps b)-d) until a desired temperature is reached in the vegetable oil based fuel present in the fuel tank.

8. Method according to claim 7, wherein said fuel is heated to a temperature in the range of 20-100 °C.

9. Method according to any one of claims 7-8, further comprising a second fuel heating step, wherein said fuel is heated to a second temperature before it is injected into the engine.

10. Method according to claim 9, wherein said second temperature is in the range of 70-90 °C.

11. Use of a fuel heating system according to any one of claims 1-6 for heating a vegetable oil based fuel for use as fuel for a diesel engine.

12. Use according to claim 11, wherein said vegetable oil based fuel comprises more than 90 % by weight of vegetable oil.

13. Use according to claim 12, wherein said vegetable oil based fuel comprises more than 95 % by weight of vegetable oil.

14. Use according to claim 13, wherein said vegetable oil based fuel comprises more than 99 % by weight of vegetable oil.

15. Use according to any one of claims 11-14, wherein at least a part of said vegetable oil based fuel is present in solid form before heating is effected and wherein said vegetable oil is present in liquid form after heating is effected.

## Patentansprüche

1. Kraftstoff-Erwärmungssystem zum Vorwärmen eines auf Pflanzenöl basierten Kraftstoffs zur Verwendung in einem Dieselmotor, wobei das Kraftstoff-Erwärmungssystem ein Kraftstofftank (1), eine Erwärmungseinrichtung (3), eine Wärmeträger-Anordnung, umfassend einen flüssigen Wärmeträger (4), und einen Wärmetauscher (6), angeordnet in dem Kraftstofftank, umfasst, wobei die Erwärmungseinrichtung einen Brenner umfasst, angeordnet um den auf Pflanzenöl basierten Kraftstoff aus dem Kraftstofftank zu verwenden um den Wärmeträger zu erwärmen und wobei der Brenner eine Zündeinrichtung umfasst, fähig ausreichend Wärme bereit zu stellen um den im Brenner befindlichen verfestigten auf Pflanzenöl basierten Kraftstoff zu schmelzen und zu zünden, wobei die Wärmeträger-Anordnung einen Transport von einem heißen Wärmeträger von der Erwärmungseinrichtung hin zu dem Wärmetauscher ermöglicht und den Transport von einem kalten Wärmeträger von dem Wärmetauscher zurück zu der Erwärmungseinrichtung ermöglicht und wobei der Wärmetauscher so angeordnet ist um einen Wärmeaustausch von dem Wärmeträger zu dem im Kraftstofftank befindlichen auf Pflanzenöl basierten Kraftstoff zu ermöglichen.

2. Kraftstoff-Erwärmungssystem gemäß Anspruch 1, wobei die Erwärmungseinrichtung unabhängig von dem Dieselmotor betrieben werden kann.

3. Kraftstoff-Erwärmungssystem gemäß einem der vorigen Ansprüche, wobei der Wärmetauscher in dem Kraftstofftank in einem Abstand von 20 cm von der Öffnung, durch die der Kraftstoff für den Motor angesaugt wird, angeordnet ist.

4. Kraftstoff-Erwärmungssystem gemäß einem der vorigen Ansprüche, wobei der Wärmetauscher in dem Kraftstofftank in einem Abstand von 10 cm von der Öffnung, durch die der Kraftstoff für den Motor angesaugt wird, angeordnet ist.

5. Kraftstoff-Erwärmungssystem gemäß einem der vorigen Ansprüche, wobei der Wärmetauscher in dem Kraftstofftank in einem Abstand von 5 cm von der Öffnung, durch die der Kraftstoff für den Motor angesaugt wird, angeordnet ist.

6. Kraftstoff-Erwärmungssystem gemäß einem der vorigen Ansprüche, ferner umfassend eine Thermokonservierungseinrichtung (10), angeordnet um ein Teil des auf Pflanzenöl basierten Kraftstoffs in dem Kraftstoffsystem unterzubringen und angeordnet um für einen längeren Zeitraum den auf Pflanzenöl basierten Kraftstoff bei erhöhter Temperatur aufrechtzuerhalten.

7. Verfahren zum Erwärmen eines auf Pflanzenöl basierten Kraftstoffs für die Verwendung in einem Dieselmotor um ein Kraftstoff-Erwärmungssystem nach einem der vorhergehenden Ansprüche zu verwenden, wobei das Verfahren die Schritte umfasst:
a) aktivieren der Erwärmungseinrichtung (3) und rückführen des Wärmeträgers in die Wärmeträger-Anordnung (4),
b) erwärmen des Wärmeträgers in der Wärmeträger-Anordnung unter Verwendung der in der Erwärmungseinrichtung erzeugten Wärme,
c) übertragen der Wärme von dem heißen Wärmeträger zu dem im Kraftstofftank (1) befindlichen auf Pflanzenöl basierten Kraftstoff vermittels des Wärmetauschers (6),
d) rückführen des kühlen Wärmeträgers von dem Wärmetauscher zu der Erwärmungseinrichtung, und
e) wiederholen der Schritte b) - d) bis eine gewünschte Temperatur des im Kraftstofftank befindlichen auf Pflanzenöl basierten Kraftstoffes erreicht worden ist.

8. Verfahren nach Anspruch 7, wobei der Kraftstoff auf eine Temperatur in einem Bereich zwischen 20 °C und 100 °C erwärmt wird.

9. Verfahren gemäß einem der vorigen Ansprüche 7 bis 8, ferner umfassend einen zweiten Kraftstoff-Erwärmungsschritt, wobei der Kraftstoff auf eine zweite Temperatur erwärmt wird bevor er in den Motor eingespritzt wird.

10. Verfahren gemäß Anspruch 9, wobei die zweite Temperatur in einem Bereich zwischen 70 °C und 90 °C liegt.

11. Verwendung des Kraftstoff-Erwärmungssystems gemäß einem der vorigen Ansprüche 1 bis 6 für das Erwärmen eines auf Pflanzenöl basierten Kraftstoffs zur Verwendung als Kraftstoff für einen Dieselmotor.

12. Verwendung gemäß Anspruch 11, wobei der auf Pflanzenöl basierte Kraftstoff gewichtsmäßig mehr als 90 % Pflanzenöl umfasst.

13. Verwendung gemäß Anspruch 12, wobei der auf Pflanzenöl basierte Kraftstoff gewichtsmäßig mehr als 95 % Pflanzenöl umfasst.

14. Verwendung gemäß Anspruch 13, wobei der auf Pflanzenöl basierte Kraftstoff gewichtsmäßig mehr als 99 % Pflanzenöl umfasst.

15. Verwendung gemäß einem der vorigen Ansprüche 11 bis 14, wobei zumindest ein Teil des auf Pflanzenöl basierten Kraftstoffs in fester Form vorliegt bevor eine Erwärmung getätigt wird und wobei der auf Pflanzenöl basierte Kraftstoff in flüssiger Form nach der Erwärmung vorliegt.

## Revendications

1. Système de chauffage de combustible pour préchauffer un combustible à base d'huile végétale destiné à être utilisé dans un moteur diesel, ledit système de chauffage de combustible comprenant un réservoir de combustible (1), un dispositif de chauffage (3), un agencement caloporteur comprenant un fluide caloporteur (4), et un échangeur de chaleur (6) agencé à l'intérieur dudit réservoir de combustible, dans lequel ledit dispositif de chauffage comprend un brûleur agencé pour utiliser le combustible à base d'huile végétale à partir dudit réservoir de combustible pour chauffer le caloporteur, et ledit combustible comprend un dispositif d'allumage pouvant fournir la chaleur suffisante pour faire fondre et allumer le combustible à base d'huile végétale solidifiée présent dans le brûleur, ledit agencement caloporteur permet le transport du caloporteur chaud, dudit dispositif de chauffage jusqu'audit échangeur de chaleur et le transport du caloporteur froid, dudit échangeur de chaleur jusqu'audit dispositif de chauffage, et ledit échangeur de chaleur est agencé pour permettre le transfert chaud dudit caloporteur vers ledit combustible à base d'huile végétale dans ledit réservoir de combustible.

2. Système de chauffage de combustible selon la revendication 1, dans lequel ledit dispositif de chauffage peut être actionné indépendamment du moteur diesel.

3. Système de chauffage de combustible selon l'une quelconque des revendications précédentes, dans lequel ledit échangeur de chaleur à l'intérieur du réservoir de combustible est agencé dans les limites d'une distance de 20 cm de l'ouverture à travers laquelle le combustible pour le moteur est aspiré.

4. Système de chauffage de combustible selon l'une quelconque des revendications précédentes, dans lequel ledit échangeur de chaleur à l'intérieur du réservoir de combustible est agencé dans les limites d'une distance de 10 cm de l'ouverture à travers laquelle le combustible pour le moteur est aspiré.

5. Système de chauffage de combustible selon l'une quelconque des revendications précédentes, dans lequel ledit échangeur de chaleur à l'intérieur du réservoir de combustible est agencé dans les limites d'une distance de 5 cm de l'ouverture à travers laquelle le combustible pour le moteur est aspiré.

6. Système de chauffage de combustible selon l'une quelconque des revendications précédentes, comprenant en outre un dispositif de conservation thermique (10) agencé pour loger une partie du combustible à base d'huile végétale dans le système de combustible et agencé pour maintenir ledit combustible à base d'huile végétale à une température élevée pendant une période de temps prolongée.

7. Procédé pour chauffer un combustible à base d'huile végétale destiné à être utilisé dans un moteur diesel en utilisant un système de chauffage de combustible selon l'une quelconque des revendications précédentes, ledit procédé comprenant les étapes consistant à :
a) activer le dispositif de chauffage (3) et la recirculation du caloporteur dans l'agencement caloporteur (4) ;
b) chauffer le caloporteur dans l'agencement caloporteur en utilisant la chaleur générée dans le dispositif de chauffage,
c) transférer la chaleur provenant du caloporteur chaud dans le combustible à base d'huile végétale présent dans le réservoir de combustible (1) au moyen de l'échangeur de chaleur (6),
d) recirculer le caloporteur froid de l'échangeur de chaleur au dispositif de chauffage, et
e) répéter les étapes b)-d) jusqu'à ce qu'une température souhaitée soit atteinte dans le combustible à base d'huile végétale présent dans le réservoir de combustible.

8. Procédé selon la revendication 7, dans lequel ledit combustible est chauffé à une température comprise dans une plage de températures allant de 20 à 100 °C.

9. Procédé selon l'une quelconque des revendications 7 à 8, comprenant en outre une deuxième étape de chauffage de combustible, dans laquelle ledit combustible est chauffé à une deuxième température avant qu'il ne soit injecté dans le moteur.

10. Procédé selon la revendication 9, dans lequel ladite deuxième température est comprise dans une plage de températures allant de 70 à 90 °C.

11. Utilisation d'un système de chauffage de combustible selon l'une quelconque des revendications 1 à 6, pour chauffer un combustible à base d'huile végétale destiné à être utilisé en tant que combustible pour un moteur diesel.

12. Utilisation selon la revendication 11, dans laquelle ledit combustible à base d'huile végétale comprend plus de 90 % en poids d'huile végétale.

13. Utilisation selon la revendication 12, dans laquelle le combustible à base d'huile végétale comprend plus de 95 % en poids d'huile végétale.

14. Utilisation selon la revendication 13, dans laquelle ledit combustible à base d'huile végétale comprend plus de 99 % en poids d'huile végétale.

15. Utilisation selon l'une quelconque des revendications 11 à 14, dans laquelle au moins une partie dudit combustible à base d'huile végétale est présente sous forme solide avant que le chauffage ne soit effectué, et dans laquelle ladite huile végétale est présente sous forme liquide après avoir été chauffée.
